# EUROPEAN PATENT SPECIFICATION

(11) **EP 1 043 897 B1**
(45) Date of publication and mention of the grant of the patent: **30.05.2012**
(21) Application number: 00400760.5
(22) Date of filing: 20.03.2000
(51) Int. Cl.: H04N 7/24, H04N 7/088, H04N 7/52, H04L 12/18

(54) **Process of managing service informations in a digital television and associated receiver**
Verwaltung von Serviceinformation in einem digitalen TV-Empfänger
Procédé de gestion de données de service dans un récepteur d'un système de télévision numérique et un récepteur d'un tel système

(30) Priority: 07.04.1999 FR 9904335
(43) Date of publication of application: 11.10.2000
(73) Proprietor: THOMSON multimedia, 92100 Boulogne Billancourt (FR)
(72) Inventor: Renault, William, 92100 Boulogne-Billancourt (FR); Dehoux, Olivier, 92100 Boulogne-Billancourt (FR); Deniau, Eric, 92100 Boulogne-Billancourt (FR)
(74) Representative: Thies, Stephan

(56) References cited:
- EP-A- 0 823 798
- EP-A- 0 893 913
- EP-A- 0 893 926
- EP-A- 0 905 983
- US-A- 4 868 866
- US-A- 5 835 493
- EUROPEAN BROADCASTING UNION: "European Telecommunication Standard ETS 300468: Digital broadcasting systems for television, sound and data services;Specification for Service Information (SI) in Digital Video Broadcasting (DVB) systems" EUROPEAN TELECOMMUNICATION STANDARD,XX,XX, October 1995 (1995-10), pages 1-61, XP002079535 Sophia Antipolis - Valbonne, FR
- GERHARD MÖLL: "Service Informationen (SI) für DVB Systeme" FERNSEH UND KINOTECHNIK,VDE VERLAG GMBH., vol. 50, no. 4, April 1996 (1996-04), pages 163-171, XP002075221 Berlin, DE ISSN: 0015-0142
- CARTWRIGHT C T: "ISSUES IN MULTIPLEX AND SERVICE MANAGEMENT IN DIGITAL MULTICHANNEL BROADCASTING" INTERNATIONAL BROADCASTING CONVENTION,GB,LONDON, 12 - 16 September 1997, pages 308-313, XP000668937

## Description

The invention relates to a process for managing service data at the level of a receiver of a digital television system, as well as a receiver of such a system.

The DVB-SI specification ('Digital Video Broadcast - Specification for Service Information' or EN 300 468 V1.3.1 (1998-02) published by ETSI) defines, together with ISO/IEC document 13818-1, a list of tables and of descriptors of the structure of a digital broadcasting network and of the objects which are contained therein. The term 'object' is understood to mean for example the transport multiplexes ('TS' or 'Transport Stream' according to the terminology of the abovementioned documents), the multiplexed services, as well as the events broadcast.

Typically, a stream in accordance with the DVB-SI document comprises the following four tables: NIT, SDT, EIT and possibly BAT.

The NIT table defines the general structure of the network and indicates the list of transport streams and of services. In addition to an NIT table relating to the network into which the receiver is plugged (for example a transponder of a satellite), NIT tables relating to other networks can be broadcast on a given network.

The BAT table bundles several services into a package of services. These services can be output by several networks.

The SDT table gives additional information relating to the services of the various transport streams of a network. By way of example, an SDT table indicates the plain name of a service.

The EIT table indicates a list of events for each service. Various parts of the EIT table indicate the events of the services of the current transport stream or of another transport stream, as well as the events in progress and immediately following the events in progress, or the future events.

It is apparent that the various broadcasting pathways of a network (for example a certain number of transponders) may broadcast information on the objects present on another network. Now, the information contained in the various tables has, depending on its nature, a greater or lesser tendency to evolve over time. Certain services may for example disappear from a network. In theory, the various tables broadcast on each of the networks ought to be set into coherence immediately on the one hand with one another, and on the other hand with the content actually broadcast. In practice, this is not necessarily the case. Indeed, a programme broadcaster does not necessarily control all the networks for which information is broadcast by his own networks.

In particular, it may happen that the updating of the tables is delayed on certain networks. It may even happen that a service is broadcast on a network, while it is not referenced in the tables broadcast on this network. This service may nevertheless be referenced in the tables of another network.

According to the processing of these tables by a digital television receiver/decoder, these incoherences between objects contained in theory in the signals transmitted and objects actually broadcast may have greater or less repercussions at user level.

The following prior art documents will be discussed briefly in the following.
D1 - EP 823 798 (THOMSON)
D2 - European Broadcasting Union - standard ETS 300468 Telecommunication Standard October 1995
D3 - Gerhard Möll- Service Information (SI) für DVB - April 1996
D4 - Cartwright "issues in multiplex and service management in digital multichannel broadcasting

The patent application D1 EP 823 798 - Thomson discloses a method for managing data structures broadcast in a television system in a receiver of such a system. The method comprises the step of : - storing a database set up from data selected from received data structures, - detecting updating of data structures including data in the database, - comparing, in case of such detection, data stored in the data base and the corresponding data of the updating data structure.

D1 discloses page 5 lines 50 to 52 :
*"For each channel, a list of services is created, containing the identifiers of the services described in the NIT table. Each service in a list is indexed on 7 bits. The logic key of a service in the database therefore includes 16 bits in all: 4 network index bits, 5 channel bits and 7 service bits."*

Therefore, this document teaches that for each channel, a list of services is stored and is independently managed. It does not teach nor suggest a comparison between two lists received from two different channels. It only teaches the updating of lists received on a specific channel.

The document D2 "European Broadcasting Union - standard ETS 300468 Telecommunication Standard October 1995" concerns the digital television field, and more specifically the processing of service information (SI) data. The digital television systems include the possibility to broadcast service in the bitstreams. These services are received by the set-top boxes. The implementation of the receiver means is specified by the above-mentioned standard.

The documents D3 and D4 specify the hierarchy of the different tables broadcast in the DVB-system, such as PAT, NIT and BAT.

These three last documents do not disclose the implementing of the reception of the table and the management of these tables.

The objective of the invention is to propose a process and receiver aimed at minimizing the repercussion of the said incoherences at user level.

The subject of the invention is a process for managing service data in a receiver of a digital television system able to transmit at least two digital streams of multiplexed objects, as disclosed in claim 1.

According to a particular embodiment, the lists of objects are lists of services.

According to a particular embodiment, an object is eliminated from the list stored by the receiver when the said object is no longer present in the objects list transmitted by the stream which initially indicated its presence.

According to a particular embodiment, a retained object is eliminated from the list of objects stored by the receiver when the demultiplexing means cannot demultiplex this object on the basis of the stream in which this object is assumed to be transmitted.

According to a particular embodiment, the names of the objects of a stored list are displayed to a user, the objects not present in the list of objects of the second stream being identified in a particular manner.

According to a particular embodiment, the list of objects furthermore comprises the identifiers of the packets transporting these objects in the second stream.

According to a particular embodiment, a tracking of the objects not present in the list of objects of the second stream which relate to the objects of this stream is interrupted during the reception of the second stream and re-established during the reception of the first stream.

The subject of the invention is also a receiver in a digital television system able to transmit at least two digital streams of multiplexed objects, each stream comprising a list of objects transmitted in the said stream, the said receiver comprising means for receiving the said streams and means for demultiplexing the said streams, the said receiver being characterized in that it comprises:
- a memory for storing a list of objects which is transmitted by a first stream, the said objects being transmitted by a second stream;
- means for programming the multiplexing means so as to perform an attempted demultiplexing of any one of the objects indicated in the said list stored during the reception of the second stream.

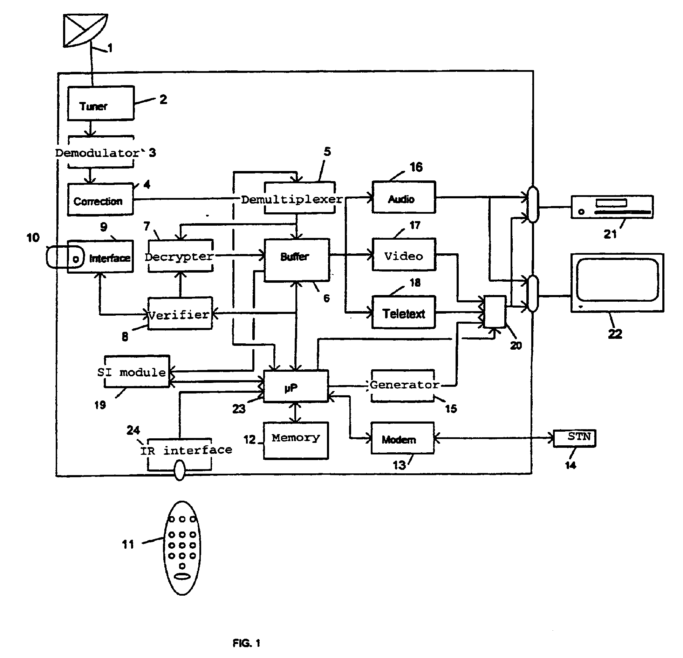

Other characteristics and advantages of the invention will become apparent through the description of a particular non-limiting exemplary embodiment of the invention, this example being described with the aid of the single Figure 1 which is a schematic diagram of a television receiver in accordance with the invention.

The operation of a receiver in a digital television system will firstly be described in general, followed by the processing by this receiver of the tables relating to the service data. The receiver is for example a receiver in accordance with the DVB specifications and which uses an ISO/IEC 13818-1 transport layer.

The receiver of Figure 1 is linked to an antenna 1, itself linked to a tuner 2 of the decoder. The signal delivered by the tuner is demodulated by a demodulator 3. The demodulated data are deinterlaced and corrected by an error corrector circuit 4 and transmitted to a demultiplexer 5.

The demultiplexer 5 comprises a certain number of filters programmed by a microprocessor 23 as a function of the various applications supported by the receiver. For the clarity of the diagram, only the most important connections of the microprocessor 23 are illustrated.

The audio or video sections or packets filtered by the demultiplexer are stored in predefined areas of a buffer memory 6 for the attention of these applications. If necessary, the information is firstly decrypted by a decrypter circuit 7 as a function of the user's entitlements, before being stored in this buffer memory 6.

According to the present example, the applications are five in number: an audio decoder 16, a video decoder 17, a teletext decoder 18, an access control assembly (comprising the decrypter 7, a verifier microcontroller 8 and an interface for microprocessor card 9 linked in the normal operating mode to a microprocessor card 10), as well as a module for managing the service information ('SI data'). The latter module is illustrated as being an element which is conceptually distinct from the receiver, but may simply be implemented, like other applications, in the form of software managed by the microprocessor 23. Functionalities relating to the extraction, to the storage and to the processing of service data of the digital stream can be offered by the receiver to other applications by virtue of this software.

The receiver also comprises an infrared interface of a remote control 24, the said interface being likewise linked to the microprocessor 23. The latter is connected to a memory 12 comprising the operating system as well as the resident or downloaded programs for running the applications. The memory 12 is illustrated in the form of a single block in Figure 1, but physically may comprise several blocks. These multiple blocks may differ in nature: read-only, random-access or reprogrammable memory, according to the specifications of a particular receiver. According to the present exemplary embodiment, the memory 12 comprises the three forms of memory, and the read-only memory part of the memory 12 comprises software making it possible to manage a user interface capable of displaying and of managing applications, for example a programme guide.

A modem 13 linked to the switched telephone network 14 is also controlled by the microprocessor.

A character generator 15 allows the generation of control menus or of graphics relating to the parameters of the receiver or to a particular application. The video signal generated by this character generator is multiplexed with one of the video signals originating from the video decoder 17 or from the teletext decoder 18 to a first SCART socket linked to a television 22 or a second SCART socket linked to a video recorder 21. The multiplexing circuit 20 is managed by the microprocessor 23.

The various service information tables broadcast on a network can be tagged in the data stream transmitted to the receiver by virtue of a combination of a packet identifier ('PID') appearing in the header of the transport packets and of a table identifier ('TID') appearing in the header of the data sections. Paragraph 5.1.3. of the DVB-SI documents cited in the introduction indicates the list of predefined values of PID and of TID for each of the tables. To retrieve a specific table, it is sufficient to program a filter of the demultiplexer with the appropriate PID value: the demultiplexer detects the corresponding sections transmitted in the stream and analyses their TID. It then makes available to the application having requested same the sections whose TID corresponds to a requested table, storing them in the buffer memory 6. A more accurate filtering can then be carried out, taking into account for example the version numbers broadcast for the various tables. A change of version number of a table indicates that at least a part of its content has changed. If a table has been acquired at a given moment, it is not necessary to acquire the same table during its next broadcast, if its version number has not changed.

Certain filters of the demultiplexer are reserved for the monitoring of tables which are important to the operation of the receiver. Typically, the NIT table is monitored continuously and the demultiplexer forewarns the service data management module in case of a change of version.

It is also possible to monitor objects other than a table: for example a transport stream, a service or a particular event. An example relating to the tracking of a service will now be described. The term 'tracking' is understood to mean the notifying of an application by the service data management module of a change of state of the relevant object, for example its disappearance or its modification.

In a broadcasting system meeting the DVB-SI specification, a service is identified uniquely by a unique service identifier made up of the identifier of the network of origin of the service (a variable designated 'original_network_id' in the DVB-SI document), of the identifier of the transport stream which comprises the service ('transport_stream_id') and of the identifier of the service in this transport stream ('service_id').

The list of services accessible by the receiver is obtained by analysing an NIT table or a BAT table obtained following the initialization of the receiver. These tables comprise the list of transport streams and for each of these streams, the list of services. The reference of the service list descriptor is 'service_list_descriptor' in the DVB_SI document. Table 12 in section 6.1 indicates that this descriptor can be present in the NIT table and in the BAT table.

Once the NIT table or the BAT table has been acquired, the lists of transport streams and the service identifiers are stored in the 'random access memory' part of the memory 12, while preserving the information relating to their hierarchical organization.

The tracking of a service is decided by an application, in the present case the services management application.

Typically, the set of services contained in the list of services is tracked, with the aim of tagging the evolution of their description (for example their name change). Following the demultiplexing of a new version of the NIT or BAT table used to construct the list of services, the microprocessor determines under the control of the module 19 for each service tracked whether it is still present. It moreover detects the new services which may possibly have appeared.

On the other hand, at the level of each service tracked, the changes of the content of the SDT table (which, it will be recalled, comprises information relating to each service of a transport stream) are also monitored. When a new version of an SDT table is detected and when it relates to one or more tracked services, its content is analysed in greater detail to determine whether changes have occurred at the level of at least one of the tracked services. Indeed, the transmission of a new version of an SDT table does not of itself indicate a change of the information relating to all the services of this table: the modifying of a single item of information in the entire table may give rise to a change of version, whereas none of the tracked services is affected by this change. In case of a change of an information item at the level of a tracked service, following a comparison with the corresponding information extracted from the previous SDT table stored in the memory 12, the application having programmed the tracking is notified.

The services management application must in particular keep the list of services up to date (this being akin to the 'televised programme channels' in everyday language) so that the user can consult it rapidly in case of need. When initializing the decoder, for example when plugging it into the mains, the NIT or BAT tables describing the package for which the receiver is designed and which are broadcast on the current transponder are demultiplexed and the lists of transport streams and of services are extracted therefrom in the form of the respective identifiers of these objects. Following this, the SDT tables are loaded and analysed with the purpose of extracting therefrom information relevant to the user: title of the service, unrestricted or conditional access, etc. This information is stored for each of the services.

The services management application maintains the list of the services of the package for which the receiver is designed. The invention comes into play when the receiver changes, for example, transponder, for example following the command of a user wishing to view a service available on this other transponder. On this latter will be broadcast service data tables other than on the initial transponder.

The receiver demultiplexes (in particular) the SDT table comprising the list of services of the new transponder and performs a comparison between this new list and the stored list:
- when a service is present in the new list, but not in the stored list, it is not added to the latter;
- when a service is present in the new list and in the stored list, the information relating to this service is possibly updated;
- when a service is not present in the new list, but is present in the stored list, then this service is retained in the stored list. Tracking thereof is not however ensured, since it is no longer present in the DVB SI tables broadcast on the transponder. The information relating to this service, in particular its identifier and its name are of course also retained in memory.

Stated otherwise, the information relating to the objects (services in the present case) broadcast by a first transponder is kept in memory, this information having been gathered on a second transponder, even if these objects are not present in the tables broadcast by the first transponder.

The list of services which is thus drawn up is presented to the user. By way of a variant embodiment, the list of services which is presented to the user indicates whether a service is included in the tables of the current transponder or not: the user is thus advised of the incoherence of the information output by the tables of the two transponders.

The services management application allows the user to choose any service from the list of service. If this service is actually broadcast, it is viewed. Hence, this is also the case if a service is not indicated in the tables of the current transponder, but nevertheless broadcast. If this service is not broadcast, the receiver will not succeed in detecting the packets furnished with the corresponding identifiers. According to the present exemplary embodiment, if the packets corresponding to the components of this service are not detected for a predetermined interval of time, for example 1 second, then an advisory message is displayed for the attention of the user by way of the character generator 15.

According to a variant embodiment, if the receiver does not detect a service for the predetermined time interval, then this service is eliminated from the list of services.

According to a variant embodiment, following a change of transponder to a transponder whose list of services has already been acquired, the receiver systematically verifies, for all the services present in the initially stored list of services but which are not present in the current SDT table of the new transponder, whether these services are present. This is performed according to the present variant by attempting to filter at least one packet relating to a service to be detected during the predetermined time interval already mentioned. This variant is preferably employed when the receiver has available sufficient resources, especially when the demultiplexer of the receiver has available a sufficient number of filters to be able to perform this detection without unduly disturbing the viewing in progress of another service.

By way of example, Table 1 below indicates a part of the content of the tables broadcast on a first transponder ('A'), whilst Table 2 indicates the content of the table of a second transponder ('B').

**Table 1**

| Transponder A | |
|---|---|
| **Table** | **Content** |
| Current NIT | Service A1 |
| | Service A2 |
| | Service B1 |
| | Service B2 |
| | Service B3 |
| Current SDT | Service A1 |
| | Service A2 |
| Other SDT (transponder B) | Service B1 |
| | Service B2 |
| | Service B3 |
| Services broadcast | Service A1 |
| | Service A2 |

**Table 2**

| Transponder B | |
|---|---|
| **Table** | **Content** |
| Current NIT | Service A1 |
| | Service A2 |
| | Service B1 |
| | Service B2 |
| | Service B3 |
| Current SDT | Service B1 |
| | Service B2 |
| Other SDT (transponder A) | Service A1 |
| | Service A2 |
| Services broadcast | Service B1 |
| | Service B2 |
| | Service B3 |

According to the example of Table 1, the information relating to the services broadcast by the transponders A and B is transmitted in an NIT table. The receiver, initially receiving the signal from transponder A, therefore in this case obtains the list of services by way of the NIT table and the information regarding the services of transponder B by way of the corresponding 'other SDT' table.

It should be noted that service B3 indicated in the other NIT and SDT tables of transponder A is not catalogued in the current SDT table of transponder B, even if it is present in the digital multiplex transmitted by this transponder.

The tables broadcast by transponder B are incorrect as regards service B3, but correct as regards services B1 and B2.

The list of services which is retained for transponder B when the receiver receives the signal from transponder A is composed of services B1, B2 and B3.

When the receiver switches from transponder A to transponder B, the list described in the NIT table, of services for transponder B is still composed of B1, B2 and B3, contrary to what is indicated in the current SDT table. Therefore, in this case one has available the actual list of services of transponder B, but the tracking of service B3 is no longer ensured.

If the receiver is now again receiving transponder A, then service B3 can again be tracked.

According to a variant embodiment, a service of which the absence in the multiplex of a transponder has been confirmed by the running of the verification test already described is eliminated definitively from the list of services of transponder B, in the sense that if the receiver again receives the signal from transponder A, which still indicates the presence of service B3 on transponder B, this service is not again added to the list of services. Service B3 is marked in this regard in the memory of the receiver.

Although the exemplary embodiment relates mainly to the drawing up of lists of services, the invention may quite obviously be extended to the retaining of lists of other objects, for example the events contained in the EIT tables.

## Claims

1. Process for managing service data,
the process being **characterized in that** it comprises the steps:
- receiving by a receiver of a digital television system a first stream of at least two streams of multiplexed objects which comprises a first list of objects transmitted on a second stream of multiplexed objects, wherein multiplexed objects are one of transport multiplexes, multiplexed services and events broadcast;
- extracting said first list of objects from the first stream and storing the first list of objects in the receiver as a stored list of objects;
- receiving the second stream of the at least two streams, this second stream comprising a second list of objects;
- keeping in said stored list of objects the set of objects of the first list of objects obtained from the first stream and storing in said stored list of objects the objects available in the second list of objects and not available in the first list of objects;
- receiving by the receiver of a digital television system at least one object transmitted on the second stream, wherein said received object being present in said stored list of objects and said received object not being present in the second list of objects.

2. Process according to Claim 1, **characterized in that** the lists of objects are lists of services.

3. Process according to one of Claims 1 or 2, **characterized in that** an object is eliminated from the stored list of objects stored in the receiver when said object is no longer present in the list of objects transmitted by the stream which initially indicated its presence.

4. Process according to one of Claims 1 to 3, **characterized in that** a kept object is eliminated from the stored list of objects stored in the receiver if said object cannot be received by the receiver on the basis of the stream in which this object is assumed to be received.

5. Process according to one of Claims 1 to 4, **characterized in that** the names of the objects of the stored list of objects are displayed to a user, wherein the objects not present in the second list of objects of the second stream being identified in a particular manner.

6. Process according to one of Claims 1 to 5, **characterized in that** the second list of objects furthermore comprises the identifiers of the packets transporting these objects in the second stream.

7. Process according to one of Claims 1 to 6, **characterized in that** a tracking of the objects not present in the second list of objects of the second stream which relate to the objects of this stream is interrupted during the reception of the second stream and re-established during the reception of the first stream.

8. Receiver in a digital television system able to receive at least two digital streams of multiplexed objects, each stream comprising a list of objects transmitted in the said stream, the said receiver comprising means (2, 3, 4) for receiving the said streams and means (5) for demultiplexing the said streams,
the said receiver being **characterized in that** it comprises:
- a memory (12) for storing a first list of objects which is transmitted by a first stream, said objects of the first list of objects being transmitted by a second stream;
- means (2, 3, 4) for receiving a second list of objects received in the second stream,
- means (23) for programming the demultiplexing means (5) so as to receive by the second stream any one of the objects indicated in the said stored first list of objects, the received object not being present in the second list of objects.

## Patentansprüche

1. Verfahren zum Verwalten von Dienstdaten,
wobei das Verfahren **dadurch gekennzeichnet ist, dass** es die folgenden Schritte umfasst :
- Empfangen eines ersten Datenstroms mindestens zweier Datenströme multiplexierter Objekte, der eine erste Liste von Objekten umfasst, die in einen zweiten Datenstrom multiplexierter Objekte übertragen werden, durch einen Empfänger eines Digitalfernsehsystems, wobei die multiplexierten Objekte Transportmultiplexe oder multiplexierte Dienste oder Ereignisrundsendungen sind;
- Extrahieren der ersten Liste von Objekten aus dem ersten Datenstrom und Speichern der ersten Liste von Objekten in dem Empfänger als eine gespeicherte Liste von Objekten;
- Empfangen des zweiten Datenstroms der mindestens zwei Datenströme, wobei dieser zweite Datenstrom eine zweite Liste von Objekten umfasst;
- Behalten der Menge von Objekten der ersten Liste von Objekten, die von dem ersten Datenstrom erhalten werden, in der gespeicherten Liste von Objekten und Speichern der Objekte, die in der zweiten Liste von Objekten verfügbar sind und die in der ersten Liste von Objekten nicht verfügbar sind, in der gespeicherten Liste von Objekten;
- Empfangen mindestens eines in dem zweiten Datenstrom übertragenen Objekts durch den Empfänger eines Digitalfernsehsystems, wobei das empfangene Objekt in der gespeicherten Liste von Objekten vorhanden ist und wobei das empfangene Objekt in der zweiten Liste von Objekten nicht vorhanden ist.

2. verfahren nach Anspruch 1, **dadurch gekennzeichnet, dass** die Listen von Objekten Listen von Diensten sind.

3. Verfahren nach einem der Ansprüche 1 oder 2, **dadurch gekennzeichnet, dass** ein Objekt aus der in dem Empfänger gespeicherten Liste von Objekten beseitigt wird, wenn das Objekt in der von dem Datenstrom, der ursprünglich seine Anwesenheit angegeben hat, übertragenen Liste von Objekten nicht mehr vorhanden ist.

4. Verfahren nach einem der Ansprüche 1 bis 3, **dadurch gekennzeichnet, dass** ein gehaltenes Objekt aus der in dem Empfänger gespeicherten Liste von Objekten beseitigt wird, falls das Objekt von dem Empfänger auf der Grundlage des Datenstroms, von dem angenommen wird, dass dieses Objekt in ihm empfangen wird, nicht empfangen werden kann.

5. Verfahren nach einem der Ansprüche 1 bis 4, **dadurch gekennzeichnet, dass** die Namen der Objekte der gespeicherten Liste von Objekten einem Nutzer angezeigt werden, wobei die Objekte, die in der zweiten Liste von Objekten des zweiten Datenstroms nicht vorhanden sind, auf besondere weise identifiziert werden.

6. Verfahren nach einem der Ansprüche 1 bis 5, **dadurch gekennzeichnet, dass** die zweite Liste von Objekten darüber hinaus die Kennungen der Pakete umfasst, die diese Objekte in dem zweiten Datenstrom transportieren.

7. Verfahren nach einem der Ansprüche 1 bis 6, **dadurch gekennzeichnet, dass** das Verfolgen der Objekte, die in der zweiten Liste von Objekten des zweiten Datenstroms nicht vorhanden sind, die sich auf die Objekte dieses Datenstroms beziehen, während des Empfangs des zweiten Datenstroms unterbrochen wird und während des Empfangs des ersten Datenstroms wiederhergestellt wird.

8. Empfänger in einem Digitalfernsehsystem, der mindestens zwei digitale Datenströme multiplexierter Objekte empfangen kann, wobei jeder Datenstrom eine Liste von Objekten umfasst, die in dem Datenstrom übertragen werden, wobei der Empfänger Mittel (2, 3, 4) zum Empfangen der Datenströme und Mittel (5) zum Demultiplexieren der Datenströme umfasst,
wobei der Empfänger **dadurch gekennzeichnet ist, dass** er umfasst:
- einen Speicher (12) zum Speichern einer ersten Liste von Objekten, die durch einen ersten Datenstrom übertragen werden, wobei die Objekte der ersten Liste von Objekten durch einen zweiten Datenstrom übertragen werden;
- Mittel (2, 3, 4) zum Empfangen einer zweiten Liste von Objekten, die in dem zweiten Datenstrom empfangen werden,
- Mittel (23) zum Programmieren des Demultiplexierungsmittels (5) in der Weise, dass es durch den zweiten Datenstrom irgendeines der in der gespeicherten ersten Liste von Objekten angegeben Objekte empfängt, wobei das empfangene Objekt in der zweiten Liste von Objekten nicht vorhanden ist.

## Revendications

1. Procédé de gestion de données de service,
le procédé étant **caractérisé en ce qu'**il comprend les étapes suivantes :
- réception par un récepteur de système de télévision numérique d'un premier flux d'au moins deux flux d'objets multiplexés qui comprend une première liste d'objets transmis sur un second flux d'objets multiplexés, où les objets multiplexés sont des multiplexeurs de transport, des services multiplexés ou des diffusions d'événements ;
- extraction de ladite première liste d'objets du premier flux et stockage de la première liste d'objets dans le récepteur en tant que liste d'objets stockée ;
- réception du second flux des deux flux au moins, ce second flux comprenant une seconde liste d'objets ;
- conservation dans ladite liste d'objets stockée de l'ensemble des objets de la première liste d'objets obtenue à partir du premier flux et stockage dans ladite liste d'objet stockée des objets disponibles dans la seconde liste d'objets et non disponibles dans la première liste d'objets ;
- réception par le récepteur d'un système de télévision numérique d'au moins un objet transmis sur le second flux, où ledit objet reçu est présent dans ladite liste d'objets stockée et ledit objet reçu n'est pas présent dans la seconde liste d'objets.

2. Procédé selon la revendication 1, **caractérisé en ce que** les listes d'objets sont des listes de services.

3. Procédé selon une des revendications 1 ou 2, **caractérisé en ce qu'**un objet est éliminé de la liste d'objets stockée enregistrée dans le récepteur lorsque ledit objet n'est plus présent dans la liste des objets transmis par le flux qui indiquait initialement sa présence.

4. Procédé selon une des revendications 1 ou 3, **caractérisé en ce qu'**un objet conservé est éliminé de la liste d'objets stockée enregistrée dans le récepteur si ledit objet ne peut pas être reçu par le récepteur du fait du flux dans lequel cet objet est supposé être reçu.

5. Procédé selon l'une des revendications 1 à 4, **caractérisé en ce que** les noms des objets de la liste d'objets stockée s'affichent à un utilisateur, dans lequel les objets non présents dans la seconde liste d'objets du seconde flux sont identifiés d'une façon particulière.

6. Procédé selon une des revendications 1 à 5, **caractérisé en ce que** la seconde liste d'objets comprend en outre les identifiants des paquets transportant ces objets dans le second flux.

7. Procédé selon une des revendications 1 à 6, **caractérisé en ce qu'**un suivi des objets non présents dans la seconde liste d'objets du second flux qui renvoie aux objets de ce flux est interrompu pendant la réception du second flux et ré-établi au cours de la réception du premier flux.

8. Récepteur d'un système de télévision numérique capable de recevoir au moins deux flux numériques d'objets multiplexés, chaque flux comprenant une liste d'objets transmise dans ledit flux, ledit récepteur comprenant des moyens (2, 3, 4) de réception desdits flux et un moyen (5) permettant de démultiplexer lesdits flux,
ledit récepteur étant **caractérisé en ce qu'**il comprend :
- une mémoire (12) pour stocker une première liste d'objets qui est transmise par un premier flux, lesdits objets de la première liste d'objets étant transmis par un second flux ;
- des moyens (2, 3, 4) de réception d'une seconde liste d'objets reçue dans le second flux ;
- un moyen (23) de programmation du démultiplexeur (5) afin de recevoir par le second flux l'un quelconque des objets indiqués dans ladite liste d'objets stockée, l'objet reçu n'étant pas présent dans la seconde liste d'objets.
